# EUROPEAN PATENT APPLICATION

(11) **EP 2 034 688 A1**
(43) Date of publication of application: **11.03.2009**
(21) Application number: 07721162.1
(22) Date of filing: 16.05.2007
(51) Int. Cl.: H04L 29/06

(54) **METHOD AND DEVICE FOR TRANSMITTING REQUEST MESSAGE IN MULTIMEDIA SYSTEM**

(30) Priority: 23.06.2006 CN 200610093911
(71) Applicant: Huawei Technologies Co., Ltd., Longgang District, Shenzhen, Guangdong 518129 (CN)
(72) Inventor: LI, Hui, Guangdong 518129 (CN)
(74) Representative: Körber, Martin Hans
(86) International application number: PCT/CN2007/001589
(87) International publication number: WO 2008/000134

(57) **Abstract**

A method and apparatus for transmitting request messages in a SIP multimedia system. The method includes: an S-CSCF entity forwards a request message according to a routing way of the SIP message after receiving a request message that meets the preset conditions; or performs initial filter criteria matching for the request message if the request message does not meet the preset conditions. In the present invention, the S-CSCF entity judges whether the received request message meets the preset conditions; and, if the received request message meets the preset conditions, the S-CSCF entity ignores the matching of initial filter criteria against the request message and sends the request message to the corresponding NE. Therefore, the S-CSCF entity does not perform initial filter criteria matching for the request message that needs only to be routed, and triggers the AS related services, so that the request message of the AS can be routed to the corresponding NE successfully. This avoids repetitive judgment on the received request message, simplifies the operation, and improves the system performance.

## Description

This application claims a priority from the Chinese Patent Application No. 200610093911.9, filed with the Chinese Patent Office on June 23, 2006 and entitled "Method and Apparatus for Transmitting Request Message in SIP Multimedia System", the contents of which are incorporated herein by reference in their entirety.

### Field of the Invention

The present invention relates to communication technologies, and in particular, to a method and apparatus for transmitting request message in a multimedia system.

### Background of the Invention

With the rapid development of communication technologies, people impose higher and higher requirements on communications. The 3rd generation (3G) mobile communication system is appealing to the consumer market by virtue of high bandwidth, multiple services and high quality.

In the 3G network architecture, with maturity of the packet switching (PS) technology, the circuit switching (CS)-based traditional telecom networks are evolving towards PS-based broadband telecom networks; and the use of the Session Initiation Protocol (SIP) as call control signaling in a PS telecom core network is one of the technical trends currently.

The SIP is a Voice over IP (VoIP) standard released by the Internet Engineering Task Force (IETF) in March 1999. The SIP uses telephone as an important application of the Internet, adds the requirements for telephone signaling and quality of service (QoS), and provides unique functions of user addressing and locating. Recently, the actual effect of the SIP goes far beyond the VoIP application. The SIP is a telephone signaling protocol, and is adapted to initiate a session. The SIP can control the setup and termination of a multimedia session involved by multiple participants, and dynamically adjust and change the session attributes such as session bandwidth requirements, transmission media type (including voice, video and data), media encoding/decoding format, and support of multicast and unicast. Therefore, it is favorable to combine the SIP with the Internet to develop value added services (VASs) for multiple applications.

The IP multimedia subsystem (IMS) that uses the SIP protocol as a service control protocol is a subsystem overlaid by the 3rd Generation Partnership Project (3GPP) onto the PS network. The IMS uses a PS domain to control the channel that carries signaling and media. Thanks to the features of the SIP such as simplicity, scalability and convenience of media combination, the IMS provides rich multimedia services by separating service control from bearer control.

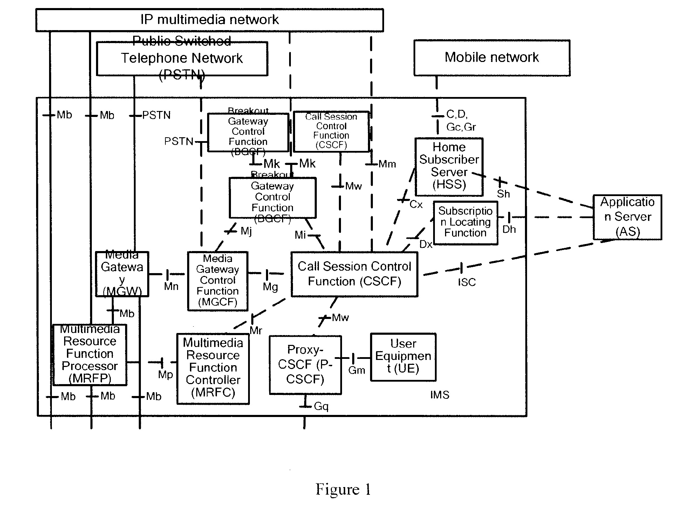

As shown in Figure 1, the network architecture of the IMS includes the following function entities: a Call Session Control Function (CSCF), a Media Gateway Control Function (MGCF), an IMS Media Gateway (IMS-MGW), a Multimedia Resource Function Controller (MRFC), a Multimedia Resource Function Processor (MRFP), a Breakout Gateway Control Function (BGCF), an IMS Application Server (AS), and a Home Subscriber Server (HSS).

As a core of the whole network, the CSCF supports SIP session processing over the SIP, and is categorized into Interrogating-CSCF (I-CSCF) and Serving-CSCF (S-CSCF). A Proxy CSCF (P-CSCF) is a portal for a User Equipment (UE) to access an IMS, and implements the functions of proxy and user agent in the SIP. The MGCF and the IMS-MGW are function entities for interworking with the CS domain and the PSTN, and are responsible for controlling the interworking of signaling and media streams. The MRFC and the MRFP are function entities for implementing multi-party conferences. The MRFC of the control plane controls the MRFP through H.248. The BGCF is a boundary between the IMS domain and the external network, and selects the specific point of interconnecting with the CS domain or PSTN.

In the IMS, the service is provided by an Application Server (AS), and the session control is implemented by the S-CSCF. The service is completely separate from the session control in terms of network architecture. Through subscription rules, the service is triggered by the S-CSCF to the AS for processing. Multiple ASs can collaborate. IMS users access the IMS through the local visited domain node P-CSC. Sessions and service control are always implemented by the home domain node in the subscription region. The session control and service control functions of the IMS are independent of access. The subscription data of the IMS is managed in the HSS altogether. Through the media gateway control node MGCF, the IMS implements interworking calls with the CS domain in the fixed network, that is, calls can be made between an IMS domain user and a CS domain user in a fixed network.

Currently, when receiving a request message from the AS, the S-CSCF is responsible for UE registration authentication and session control, implementing the basic session routing function for the calling and called IMS users, and triggering the relevant services of the AS according to the subscribed IMS triggering rules. However, if the request message received by the S-CSCF from the AS is a request for media resources, no clear solution is available in the prior art about how to route the request message to the corresponding MRFC.

### Summary of the Invention

An embodiment of the present invention provides a method and apparatus for transmitting request message so that the request message of an AS can be routed to a specified Network Element (NE).

An embodiment of the present invention provides a method for transmitting request message in a multimedia system. The method includes:when an S-CSCF entity receives a request message, it determines whether the request meets preset conditions, if the request meets the preset conditions, then it forwards the request message according to a routing way of the SIP message, otherwise, it performs initial filter criteria matching for the request message.

An embodiment of the present invention provides an apparatus for transmitting request message in a multimedia system. The apparatus includes: a transceiver module, adapted to interact with other network entities; a matching module, adapted to perform initial filter criteria matching for the request message received by the transceiver module; and a judging module, adapted to determine whether the request message meets preset conditions after the transceiver module receives a request message, and if the preset conditions are satisfied, instruct the transceiver module to forward the request message according to a routing way of the SIP message.

An embodiment of the present invention provides another apparatus for transmitting request message in a SIP multimedia system. The apparatus includes: a receiving module, adapted to receive request message; a sending module, adapted to send the received request message; a judging module, adapted to determine whether the request message meets the preset conditions; and a matching module, adapted to perform initial filter criteria matching for the request message.

When the request message meets the preset conditions, the sending module sends the request message according to a routing way of the SIP message.

When the request message does not meet the preset conditions, the matching module performs initial filter criteria matching for the request message.

In the technical solution provided by an embodiment of the present invention, the S-CSCF entity determines whether the received request message meets the preset conditions; if the preset conditions are satisfied, the S-CSCF entity sends the request message to the corresponding NE directly. Therefore, the S-CSCF entity need not match the message against the initial filter criteria when the received message needs only to be routed. The S-CSCF entity then triggers the AS related services so that the request message of the AS can be routed to the corresponding NE. This avoids repetitive judgment on the received request message, simplifies the operation, and improves the system performance.

### Brief Description of the Drawings

Figure 1 shows the IMS network architecture in the prior art;

Figure 2 shows the process of the method for transmitting request message in a SIP multimedia system according to embodiment 1 of the present invention;

Figure 3 shows the process in which the S-CSCF entity that receives the request message and the MRFC address in the request address are located in the same network domain in embodiment 1 of the present invention;

Figure 4 shows the process in which the S-CSCF entity that receives the request message and the MRFC address in the request address are located in different network domains in embodiment 1 of the present invention; and

Figure 5 shows the structure of the S-CSCF entity in embodiment 4 of the present invention.

### Detailed Description of the Embodiments

For better understanding of the objectives, technical solution and merits of the present invention, the present invention is hereinafter described in detail with reference to the accompanying drawings.

In embodiments of the present invention, the SIP multimedia system is an IMS.

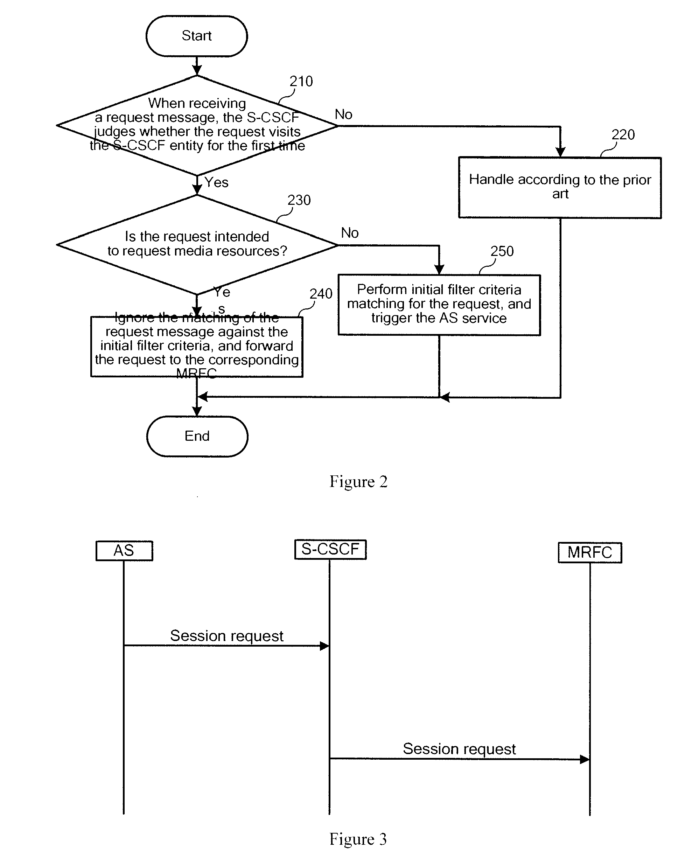

As shown in Figure 2, the method for transmitting request message in a SIP multimedia system in embodiment 1 of the present invention includes the following steps:

Step 210: When the S-CSCF entity of the IMS receives a request message sent from the AS to the MRFC, the S-CSCF judges whether the request message visits the S-CSCF entity for the first time. Specifically, when the S-CSCF entity of the IMS receives a request message from the AS, the S-CSCF checks whether the top item of the "Route" header field in the request message contains an original session ID. If the original session ID exists, the S-CSCF determines that it has received this request message before, and goes to step 220; otherwise, the S-CSCF determines that the request message visits the S-CSCF entity for the first time, and the S-CSCF skips to step 230.

Step 220: Subsequent processing for the request message according to the

### prior art.

Step 230: The S-CSCF entity further judges whether the request message is intended to request media resources. Specifically, a request ID is predefined. The S-CSCF entity checks whether the request message is intended to request media resources by checking for existence of the predefined request ID in the request message. If the request message contains a predefined request ID, the S-CSCF entity judges that the message is intended to request media resources, and goes to step 240; otherwise, the S-CSCF entity judges that the message is intended to request a service, and skips to step 250. The subscription data of the caller and the callee is matched against the initial filter criteria for the request message, and the AS related services are triggered. This process is the same as that in the prior art, so it is omitted here.

Step 230 is performed after step 210. Therefore, the S-CSCF entity only judges the request message that visit the S-CSCF entity for the first time. This avoids repetitive judgment made by the S-CSCF entity about whether the received request message is intended to request media resources, simplifying the operation and improving the system performance.

Step 240: The S-CSCF entity determines that the received request message is intended to request media resources. Therefore, the S-CSCF entity ignores the matching of the corresponding subscription data in the request message against the initial filter criteria, and forwards the request message to the corresponding MRFC. Therefore, the S-CSCF entity does not need to perform initial filter criteria matching after receiving a message intended to request media resources, and triggers the AS related services, so that the request message of the AS can be routed to the MRFC successfully. Specifically, the S-CSCF entity judges whether the S-CSCF entity and the MRFC address in the request address are located in the same network domain according to the request address carried in the request message. If the S-CSCF entity and the MRFC address are located in the same network domain, the request message is forwarded in the mode as shown in Figure 3. The S-CSCF entity sends the request message to the corresponding MRFC through the Mr interface between the S-CSCF entity and the MRFC according to the MRFC address in the request address.

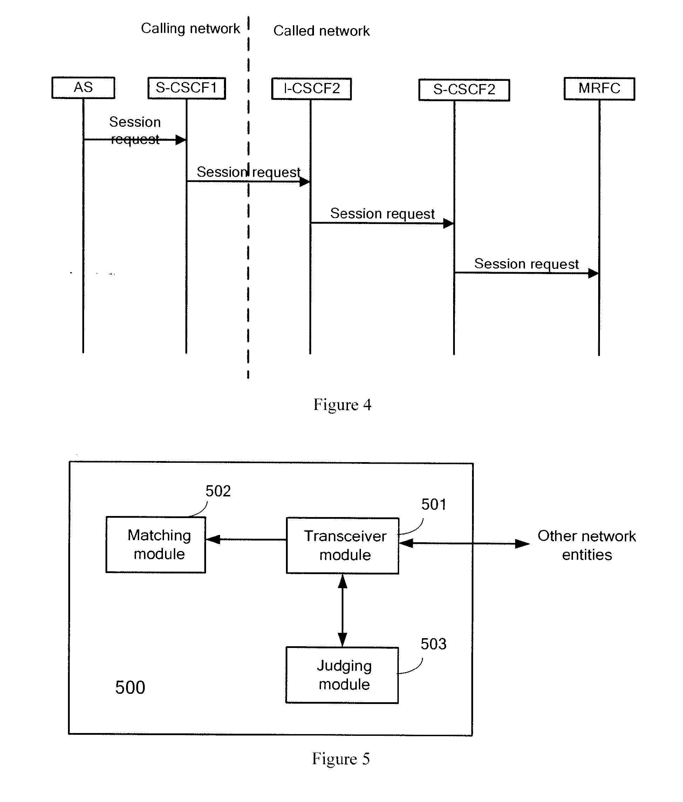

If the S-CSCF entity and the MRFC address are located in different network domains, the request message is forwarded in the mode as shown in Figure 4. After receiving a media resource request message from the AS, the S-CSCF1 in the calling network obtains the I-CSCF2 address in the called network domain through the request address in the request message, and routes the request message to the I-CSCF2. The I-CSCF decides the S-CSCF2 in the called network according to the combination of various conditions, and routes the request message to the S-CSCF2. After the S-CSCF2 determines that the request message is intended to request media resources, the S-CSCF2 ignores the matching of the request message against the initial filter criteria, and forwards the request message to the corresponding MRFC through an Mr interface between the S-CSCF entity and the MRFC according to the MRFC address in the request address. The S-CSCF2 judges whether the request message is intended to request media resources in the same mode as the S-CSCF1 does, so the mode is omitted here.

Step 250: The subscription data is matched against the initial filter criteria in the request message, and the AS related services are triggered. This is the same as that in the prior art, so it is omitted here.

In embodiment 2 of the present invention, the method for transmitting the request message in a SIP multimedia system is similar to the method in embodiment 1. The only difference is as follows: In embodiment 1, the S-CSCF entity checks whether the request message contains the preset request ID to determine whether the request message is intended to request media resources; in embodiment 2, the S-CSCF entity checks whether the request message contains a preset MRFC address to determine whether the request message is intended to request media resources. For example, the S-CSCF entity stores all available MRFC addresses in the local address list in advance; if the request address in the request message contains the MRFC address in the address list, the S-CSCF determines that the request message is intended to request media resources; or, all available MRFC addresses are stored in an external database, and the S-CSCF entity queries the external database to determine whether the request address of the request message contains an MRFC address. If determining that the received request message is intended to request media resources, the S-CSCF entity ignores the matching of the request message against the initial filter criteria, and forwards the request message to the corresponding MRFC according to a routing way of the SIP message.

In embodiment 3 of the present invention, a specific ID is preset in the subscription data. The S-CSCF entity checks whether the subscription data of the user who sends the request contains the specific ID. If the subscription data contains the specific ID, the S-CSCF entity ignores the matching of the request message against the initial filter criteria, and forwards the request message to the corresponding NE according to routing way of the SIP message.

In this way, the S-SCCF is used as a router, and transfers all request messages of a specific user to a specific NE for processing, thus making the service implementation more flexible.

In embodiment 4 of the present invention, conditions are preset, and the S-CSCF entity checks whether the subscription data of the user who sends the request message meets the preset conditions.

If the subscription data meets the preset conditions, the S-CSCF entity ignores the matching of the request message against the initial filter criteria, and forwards the request message to the corresponding NE according to a routing way of the SIP message. The detailed procedure includes the following steps:

Step 310: After determining that the received request message visits the S-CSCF entity for the first time, the S-CSCF entity judges whether the request message meets the preset condition. Generally, the preset condition include at least one of the following three conditions: a predefined special ID is contained in the request message, a predefined special ID is contained in the subscription data, and whether the specific address is contained in the request address of the request message. If the S-CSCF determines that the message meets the preset condition, go to step 320; otherwise skip to step 330.

The S-CSCF entity only judges the request message that visits the S-CSCF entity initially, thus avoiding repetitive judgment made by the S-CSCF entity about whether the received request message meets the preset conditions, simplifying the operation and improving the system performance.

Step 320: The S-CSCF entity determines that the received request message meets the preset conditions. Therefore, the S-CSCF entity ignores the matching of the subscription data in the request message against the initial filter criteria, and forwards the request message to the corresponding MRFC. Therefore, the S-CSCF entity does not need to perform matching against the initial filter criteria for every received request message, and triggers the AS related services, so that the request message of the AS can be routed to the MRFC successfully.

Step 330: The subscription data in the request message is matched against the initial filter criteria, and the AS related services are triggered. This is the same as that in the prior art, so it is omitted here.

In embodiment 5 of the present invention, as shown in Figure 5, an apparatus 500 for transmitting request message in a multimedia system (for example, an S-CSCF entity) includes: a transceiver module 501, adapted to interact with other network entities; a matching module 502, adapted to perform matching of the initial filter criteria for the request message received by the transceiver module; a judging module 503, adapted to determine whether the request message meets a preset conditions when transceiver module 501 receives a request message; and instruct the transceiver module to notify the matching module 502 to ignore the matching of the request message against the initial filter criteria if the request message meets the preset condition, and forward the request message to the corresponding MRFC.

The judging module 503 determines whether the request message meets the preset conditions by checking whether the request message contains a predefined request ID or whether the request address of the request message contains a predefined address.

An embodiment of the present invention also provides an apparatus for transmitting request message in a SIP multimedia system. The apparatus includes: a receiving module, adapted to receive request message; a sending module, adapted to send the received request message; a judging module, adapted to determine whether the request message meets the preset conditions; and a matching module, adapted to perform initial filter criteria matching for the request message.

When the request message meets the preset conditions, the sending module sends the request message according to a routing way of the SIP message.

When the request message does not meet the preset conditions, the matching module performs initial filter criteria matching for the request message.

The preset conditions are:

a predefined ID is contained in the request message; or

a predefined ID is contained in the subscription data; or

a predefined address is contained in the request address of the request message.

A skilled person in the art may understand that all or part of the steps in the preceding embodiments can be completed by using a program to instruct the related hardware. The program may be stored in a computer-readable storage medium, for example, ROM/RAM, disk and CD.

The preceding embodiments take MRFC as an example. It is understandable that the present invention is not limited to MRFC, but is applicable to all request messages that need only to be routed through an S-CSCF entity and without the necessity of matching against the initial filter criteria.

In the technical solution provided by the embodiments of the present invention, the S-CSCF entity judges whether the received request message meets the preset conditions; and, if received request message meets the preset conditions, the S-CSCF entity sends the request message to the corresponding NE directly. Therefore, the S-CSCF entity does not necessarily match the message against the initial filter criteria if the received message needs only to be routed, and triggers the AS related services so that the request message of the AS can be routed to the corresponding NE smoothly. This avoids repetitive judgment on the received request message, simplifies the operation, and improves the system performance.

Although the invention has been described through some preferred embodiments and accompanying drawings, the invention is not limited to such embodiments. It is apparent that those skilled in the art can make various modifications and variations to the invention without departing from the spirit and scope of the invention.

## Claims

1. A method for transmitting a request message in a multimedia system, comprising:
receiving, by an Service Call Session Control Function, S-CSCF entity, the request message ;
determining whether the request message meets preset conditions, if the request message meets the preset conditions, forwarding the request message according to a routing way of a Session Initiation Protocol, SIP message, otherwise, performing initial filter criteria matching for the request message.

2. The method of claim 1, wherein the preset conditions comprise that a predefined ID is contained in the request message.

3. The method of claim 1, wherein the preset conditions comprise that a predefined ID is contained in a subscription data.

4. The method of claim 1, wherein the preset conditions comprise that request address of the request message is contained in predefined address(es) .

5. The method of claim 4, wherein the predefined address(es) is stored in an address list of the S-CSCF in advance.

6. The method of claim 4, wherein the predefined address(es) is stored in an external database in advance, and the S-CSCF determines whether the request address of the request message is contained in predefined address(es) by querying the external database.

7. The method of claim 4, wherein the network element corresponding to the preset conditions is Multimedia Resource Function Controller MRFC, and the predefined address(es) are address(es) of MRFC.

8. An apparatus for transmitting a request message in a multimedia system, comprising:
a transceiver module, adapted to interact with other network entities; a routing way
a matching module, adapted to perform initial filter criteria matching for a request message received by the transceiver module; and
a judging module, adapted to judge whether the request message meets preset conditions after the transceiver module receives a request message, and if the preset conditions are satisfied, instruct the transceiver module to forward the request message according to the routing way of the SIP message.

9. The apparatus of claim 8, wherein the preset conditions comprises the following:
a predefined ID is contained in the request message; or
a predefined ID is contained in a subscription data; or
the request address of the request message is contained in predefined address(es).

10. The apparatus of claim 8, wherein the judging module is further adapted to indicate the matching module to perform initial filter criteria matching for the request message if the judging module determines that the request message does not meet the preset conditions.

11. The apparatus for transmitting request message in a SIP multimedia system, comprising:
a receiving module, adapted to receive request message;
a sending module, adapted to send the received request message;
a judging module, adapted to judge whether the request message meets the preset conditions; and
a matching module, adapted to perform initial filter criteria matching for the request message, wherein, when the request message meets the preset conditions, the sending module sends the request message according to the routing way of the SIP message, and when the request message does not meet the preset conditions, the matching module performs initial filter criteria matching for the request message.

12. The apparatus of claim 11, wherein the preset conditions comprise the following:
a predefined ID is contained in the request message; or
a predefined ID is contained in a subscription data; or
the request address of the request message is contained in predefined address(es).
